# EUROPÄISCHE PATENTANMELDUNG

(11) **EP 1 591 154 A1**
(43) Veröffentlichungstag der Anmeldung: **02.11.2005**
(21) Anmeldenummer: 05004765.3
(22) Anmeldetag: 04.03.2005
(51) Int. Cl.: B01B 1/00, C01B 3/32, B01J 8/04

(54) **Verdampferanordnung zur Erzeugung eines Kohlenwasserstoffdampf/Mischmaterial-Gemisches, insbesondere für eine Reformeranordnung eines Brennstoffzellensystems**

(30) Priorität: 26.04.2004 DE 102004020507
(71) Anmelder: J. Eberspächer GmbH Co. KG, 73730 Esslingen (DE)
(72) Erfinder: Kaupert, Andreas, 89073 Ulm (DE); Eberspach, Günter, 72649 Wolfschlugen (DE); Blaschke, Walter, 73779 Deizisau (DE); Collmer, Andreas, 73773 Aichwald (DE); Reiners, Karsten, 89073 Ulm (DE); Hartmann, Lutz, 52134 Herzogenrath (DE)

(57) **Zusammenfassung**

Eine Verdampferanordnung zur Erzeugung eines Kohlenwasserstoffdampf/Mischmaterial-Gemisches, umfassend eine durch einen Umfangswandungsbereich (46) und einen Bodenwandungsbereich (44) umgebene Mischkammer (50), wobei in dem Umfangswandungsbereich (46) Eintrittsöffnungen (48) zum Eintritt von gasförmigem Mischmaterial in die Mischkammer (50) vorgesehen sind und der Bodenwandungsbereich (44) ein poröses Verdampfermedium (62) zur Aufnahme von flüssigem Kohlenwasserstoff sowie dem porösen Verdampfermedium (62) zugeordnet eine erste Heizeinrichtung (76) aufweist, ist gekennzeichnet durch eine zweite Heizeinrichtung (94) zum Erwärmen des Mischmaterials vor oder/und bei Durchtritt durch die Eintrittsöffnungen (48).

## Beschreibung

Die vorliegende Erfindung betrifft eine Verdampferanordnung zur Erzeugung eines Kohlenwasserstoffdampf/Mischmaterial-Gemisches, welches beispielsweise in einer Reformeranordnung eines Brennstoffzellensystems umgesetzt werden kann, um daraus ein wasserstoffhaltiges Gas zu erzeugen, oder bei einer Brennkraftmaschine mit Abgasreinigung oder Abgasrückführung. Dieses wasserstoffhaltige Gas kann in einer Brennstoffzelle eines derartigen Brennstoffzellensystems zusammen mit Luftsauerstoff zur Reaktion gebracht werden, um dabei elektrische Energie zu erzeugen. Insbesondere in der Startphase derartiger Verdampferanordnungen bzw. Brennstoffzellensysteme besteht das Problem, dass in verschiedenen Systembereichen vergleichsweise hohe Temperaturen erforderlich sind, um die bei der Umsetzung erforderlichen katalytischen Reaktionen in Gang bringen zu können. Bis derartige Temperaturen erreicht sind, kann eine entsprechende katalytische Reaktion nicht oder nur bedingt und mit vergleichsweise schlechter Qualität ablaufen.

Es ist das Ziel der vorliegenden Erfindung, eine Verdampferanordnung zur Erzeugung eines Kohlenwasserstoffdampf/Mischmaterial-Gemisches bereitzustellen, welches schneller in einen für den gewünschten Betrieb erforderlichen Zustand gebracht werden kann und verbessert bei einem derartigen Zustand gehalten werden kann.

Gemäß einem Aspekt der vorliegenden Erfindung wird diese Aufgabe gelöst durch eine Verdampferanordnung zur Erzeugung eines Kohlenwasserstoffdampf/Mischmaterial-Gemisches, umfassend eine durch einen Umfangswandungsbereich und einen Bodenwandungsbereich umgebene Mischkammer, wobei in dem Umfangswandungsbereich Eintrittsöffnungen zum Eintritt von gasförmigem Mischmaterial in die Mischkammer vorgesehen sind und der Bodenwandungsbereich ein poröses Verdampfermedium zur Aufnahme von flüssigem Kohlenwasserstoff sowie dem porösen Verdampfermedium zugeordnet eine erste Heizeinrichtung aufweist, gekennzeichnet durch eine zweite Heizeinrichtung zum Erwärmen des Mischmaterials vor oder/und bei Durchtritt durch die Eintrittsöffnungen.

Bei der erfindungsgemäßen Verdampferanordnung wird also nicht nur der zunächst noch flüssige Kohlenwasserstoffdampf erwärmt, was an sich erforderlich ist, um ihn überhaupt zur Verdampfung zu bringen. Es wird auch das mit dem Kohlenwasserstoffdampf zu mischende Mischmaterial, also beispielsweise Luft, Wasserdampf, Brennerabgas, Brennstoffzellenabgas, Brennkraftmaschinenabgas oder dergleichen, vor dem Vermischen mit dem Kohlenwasserstoffdampf erwärmt. Die Folge davon ist, dass das dann das weiter zu nutzende Gemisch mit deutlich höherer Temperatur bereitgestellt werden kann, so dass die dann durchzuführenden Reaktionen, wie beispielsweise die katalytische Erzeugung von Wasserstoff, früher einsetzen können bzw. mit verbesserter Qualität ablaufen können.

Beispielsweise kann die zweite Heizeinrichtung am Umfangswandungsbereich vorgesehen sein. Hier ist es aus baulichen Gründen besonders vorteilhaft, wenn die zweite Heizeinrichtung den Umfangswandungsbereich umgebend angeordnet ist.

Die Aktivierung der zweiten Heizeinrichtung kann dann in besonders einfacher Art und Weise erfolgen, wenn diese einen elektrisch erregbaren Heizleiter umfasst.

Weiter kann vorgesehen sein, dass die zweite Heizeinrichtung einen in Strömungsrichtung des Mischmaterials stromaufwärts der Eintrittsöffnungen liegenden Wärmetauscherbereich umfasst. Insbesondere bei Kombination der erfindungsgemäßen Verdampferanordnung mit einem Brennstoffzellensystem kann der Wärmetauscherbereich als Wärmequelle dann einen in Strömungsrichtung stromabwärts der Mischkammer liegenden und Katalysatormaterial enthaltenden Reformerbereich umfassen. D.h., dass die bei der katalytischen Erzeugung von Wasserstoff entstehende Wärme genutzt werden kann, um das oder einen Teil des Mischmaterials vor dem Einleiten in die Mischkammer vorzuwärmen. Dies trägt zu einer erhöhten Qualität der ablaufenden Reaktion bei.

Gemäß einem weiteren Aspekt der vorliegenden Erfindung kann vorgesehen sein, dass wenigstens eine Kohlenwasserstoffleitung zum Leiten von flüssigem Kohlenwasserstoff zu dem porösen Verdampfermedium vorgesehen ist und dass ein Austrittsendbereich der wenigstens einen Kohlenwasserstoffleitung unter Druck gegen das poröse Verdampfermedium gehalten ist.

Durch das feste Andrücken oder Anpressen der wenigstens einen Kohlenwasserstoffleitung gegen das poröse Verdampfermedium wird sichergestellt, dass der gesamte über diese Leitung herangeförderte flüssige Kohlenwasserstoff auch in den Volumenbereich des porösen Verdampfermediums gelangt und sich darin verteilen kann. Die Folge davon ist eine verbesserte und gleichmäßigere Einleitung und Verteilung des flüssigen Kohlenwasserstoffs in dieses Verdampfermedium mit einer entsprechen vergleichmäßigten Abdampfung und somit auch verbesserten Gemischbildung.

Die zuverlässige und im Wesentlichen vollständige Einleitung des flüssigen Kohlenwasserstoffs in den Volumenbereich des porösen Verdampfermediums kann dadurch noch unterstützt werden, dass die wenigstens eine Kohlenwasserstoffleitung in ihrem Austrittsendbereich einen schneidenartigen und gegen das poröse Verdampfermedium gepressten Randbereich aufweist.

Wenn weiter vorgesehen ist, dass die wenigstens eine Kohlenwasserstoffleitung in oder/und nahe ihrem Austrittsendbereich thermisch isoliert ist, dann besteht nicht die Gefahr, dass durch thermische Einflüsse der flüssige Kohlenwasserstoff bereits vor dem Austritt aus der ihn führenden Leitung zu verdampfen beginnt und dabei die Verteilungscharakteristik im porösen Verdampfermedium beeinträchtigt.

Hierzu kann beispielsweise vorgesehen sein, dass die wenigstens eine Kohlenwasserstoffleitung in oder/und nahe ihrem Austrittsendbereich doppelwandig ausgebildet ist. Es kann somit sichergestellt werden, dass beispielsweise das die Leitung bereichsweise umströmende und bereits vorerwärmte Mischmaterial nicht in unmittelbaren Kontakt mit dem den flüssigen Kohlenwasserstoff führenden Leitungsbereich treten kann.

Weiter kann eine möglichst gleichmäßige Verteilung des flüssigen Kohlenwasserstoffs in dem porösen Verdampfermedium auch unter Berücksichtigung der zur Verteilung mit beitragenden Schwerkraft dadurch unterstützt werden, dass die wenigstens eine Kohlenwasserstoffleitung - bezogen auf eine Längsmittenachse Mischkammer - exzentrisch in das poröse Verdampfermedium einmündet.

Gemäß einem weiteren Aspekt der vorliegenden Erfindung kann vorgesehen sein, dass an einer von der Mischkammer abgewandten Seite des porösen Verdampfermediums zwischen diesem und der ersten Heizeinrichtung ein Wärmeleitelement angeordnet ist. Durch das Positionieren eines Wärmeleitelements zwischen dem porösen Verdampfermedium und der ersten Heizeinrichtung wird sichergestellt, dass die in der ersten Heizeinrichtung bereitgestellte Wärme nicht nur lokal sondern möglichst gleichmäßig verteilt in das poröse Verdampfermedium eingeleitet wird und somit eine möglichst gleichmäßige Abdampfung unterstützt wird.

Hier kann beispielsweise vorgesehen sein, dass das Wärmeleitelement eine Wärmeleitplatte, vorzugsweise mit Schalenform, umfasst.

Gemäß einem weiteren Aspekt der Erfindung kann vorgesehen sein, dass in einem in Strömungsrichtung stromabwärts der Mischkammer angeordneten Reformerbereich wenigstens zwei in Strömungsrichtung aufeinander folgende Katalysatoranordnungen vorgesehen sind. Durch das Bereitstellen mehrerer aufeinander folgender Katalysatoranordnungen kann die Effizienz bei der Umsetzung des in der Mischkammer erzeugten Gemisches in ein wasserstoffhaltiges Gas gesteigert werden.

Um dabei sicherzustellen, dass in derjenigen oder denjenigen der Katalysatoranordnungen, in welchen Reaktionen weniger stark exotherm ablaufen, ausreichend Wärme gespeichert bleibt, um diese Reaktion durchführen zu können, wird vorgeschlagen, dass wenigstens eine der Katalysatoranordnungen stärker gegen Wärmeabgabe gesichert ist, als wenigstens eine andere der Katalysatoranordnungen. Durch die stärkere Abschirmung gegen Wärmeabgabe wird in diesem lokalen Bereich dann verstärkt Wärme gehalten.

Die vorliegende Erfindung wird nachfolgend mit Bezug auf die beiliegenden Figuren detailliert beschrieben. Es zeigt:
- Fig. 1: eine Teil-Längsschnittansicht einer erfindungsgemäßen Verdampferanordnung in Verbindung mit einem Reformerbereich;
- Fig. 2: eine perspektivische Ansicht des eine erste Heizeinrichtung aufweisenden Bereichs der Verdampferanordnung der Fig. 1;
- Fig.3: eine Schnittansicht, welche die Zusammenwirkung einer Kohlenwasserstoffleitung mit einem porösen Verdampfermedium darstellt;
- Fig. 4: eine der Fig. 3 entsprechende Ansicht einer abgewandelten Ausgestaltungsvariante;
- Fig. 5: eine weitere der Fig. 3 entsprechende Ansicht einer abgewandelten Ausgestaltungsvariante.

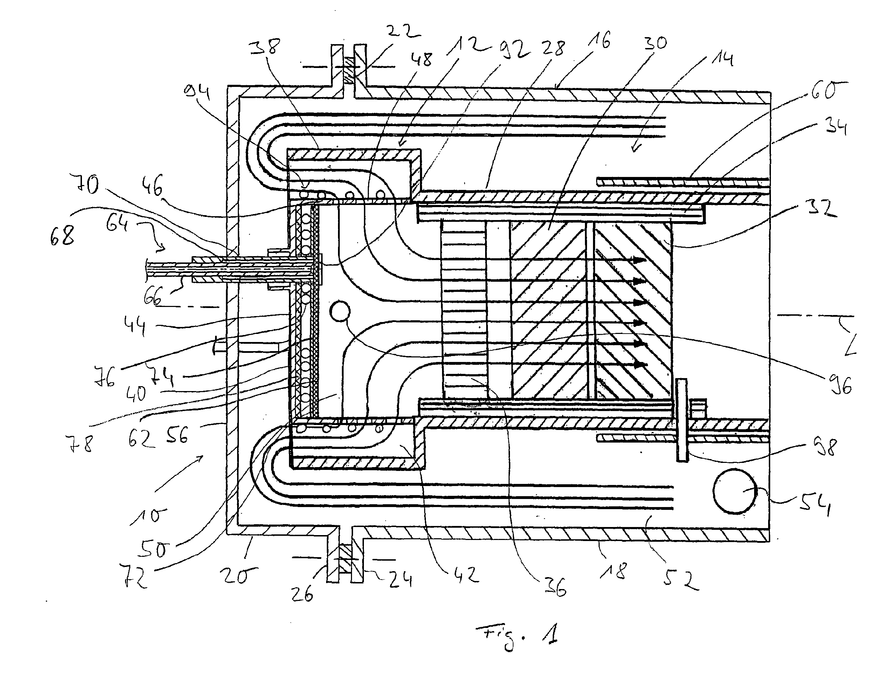

In Fig. 1 ist ein Bereich eines beispielsweise in einem Kraftfahrzeug einsetzbaren Brennstoffzellensystems dargestellt. Dieser allgemein als Verdampferanordnung bezeichnete Bereich 10 umfasst einen Verdampfungsbereich 12, in welchem ein Gemisch aus verdampftem Kohlenwasserstoff und gasförmigem Mischmaterial bereitgestellt wird, und umfasst weiterhin einen allgemein mit 14 bezeichneten Reformerbereich, in dem durch katalytische Reaktion das im Verdampfungsbereich 12 bereitgestellte Gemisch umgesetzt wird, um so ein in einer Brennstoffzelle einsetzbares wasserstoffhaltiges Gas zu erzeugen.

Die Verdampferanordnung 10 ist allgemein in einem Gehäuse 16 aufgenommen, das beispielsweise zwei Gehäuseteile 18, 20 umfasst. Die beiden Gehäuseteile 18, 20 sind beispielsweise unter Zwischenlagerung eines Dichtungsmaterials 22 miteinander gasdicht und lösbar verbunden, beispielsweise durch eine Mehrfachverschraubung in nach radial außen greifenden Flanschbereichen 24, 26 oder durch ein Spannelement. Die Trennstelle zwischen den beiden Gehäuseteilen 18, 20 ist vorzugsweise so positioniert, dass durch Abnehmen von einem der Gehäuseteile, beispielsweise dem Gehäuseteil 20, Zugriff auf möglicherweise für Reperatur oder Wartungsvorgänge relevante Systembereiche, wie z.B. den Verdampfungsbereich 12, erlangt werden kann. In dem Gehäuse 16 ist ein weiteres, inneres Gehäuse 28 angeordnet. Dieses röhrenartig ausgestaltete innere Gehäuse 28 trägt im Reformerbereich 14 nachfolgend noch angesprochene Katalysatoranordnungen 30, 32. Diese können am inneren Gehäuse 28 beispielsweise über ein elastisches, schwingungsdämpfendes Material 34 getragen sein. Dies trägt zum Schutz der Katalysatoranordnung 30, 32 gegen die in Kraftfahrzeugen allgemein vorhandenen und möglicherweise die Funktionalität der Katalysatoranordnung 30, 32 beeinträchtigenden Vibrationen bei. Dieses elastische Material 34 ist vorzugsweise auch gasdicht, so dass ein Umströmen der Katalysatoranordnungen 30, 32 an ihren äußeren Bereichen nicht möglich ist und der gesamte Gemischstrom durch diese Katalysatoranordnung 30, 32 hindurchtreten muss.

In der Strömungsrichtung des Gas- bzw. Gemischstroms stromaufwärts der Katalysatoranordnungen 30, 32 ist ein Flammhalter 36 positioniert. Weiter stromaufwärts weist das innere Gehäuse 28 einen bezüglich seiner Längsmittenachse L radial erweiterten Bereich 38 auf. Dieser begrenzt mit einem im Wesentlichen topfartig ausgestalteten Mischkammergehäuse 40 einen ringartigen Einströmraum 42. Dieses Mischkammergehäuse 40 weist einen Bodenwandungsbereich 44 und einen Umfangswandungsbereich 46 auf, der beispielsweise an den radial kleiner bemessenen Bereich des inneren Gehäuses 28 angrenzt und damit fest verbunden ist. Es sei hier darauf hingewiesen, dass selbstverständlich der Bodenwandungsbereich 40 und der Umfangswandungsbereich 46 oder ein Teil desselben als getrennte Baugruppen bereitgestellt sein können, selbstverständlich aber auch integral ausgebildet sein können, wie dies in der Fig. 1 dargestellt ist.

Im Umfangswandungsbereich 46 sind mehrere Eintrittsöffnungen 48 ausgebildet, die eine Verbindung zwischen dem angesprochenen Raum 42 und einer im Mischkammergehäuse 40 gebildeten Mischkammer 50 bereitstellen. Das zur Gemischbildung einzusetzende Gas, also beispielsweise Luft, tritt in den Innenraum des Gehäuses 16, also im Wesentlichen einen zwischen dem inneren Gehäuse 28 und dem Gehäuseteil 18 gebildeten Volumenbereich 52 über eine oder mehrere Öffnungen 54 ein. Die Luft strömt dann beispielsweise unter der Förderwirkung eines nicht dargestellten Gebläses in Richtung zum Gehäuseteil 20, wird an einem Bodenbereich 56 desselben axial umgelenkt - axial wiederum bezogen auf die Längsmittenachse L - und tritt in den ringartigen Raumbereich 42 ein. Über die Eintrittsöffnungen 48 gelangt dieses Mischmaterial in die Mischkammer 50. Man erkennt, dass bei diesem Strömen das Mischmaterial in demjenigen Bereich, in welchem das innere Gehäuse 28 zum Bilden des Abschnitts 38 radial erweitert ist, eine vergrößerte Umfangsfläche des inneren Gehäuses 28 umströmen wird, mit der Folge, dass in dem Fall, in dem dieses Mischmaterial bereits vorerwärmt ist, hier ein verstärkter Wärmeübertrag auf das innere Gehäuse 28 stattfinden kann.

Um beim Eintritt des Mischmaterials in die Mischkammer 50 eine gute Durchmischung mit dem dort ebenfalls vorhandenen Kohlenwasserstoffdampf zu sorgen, können beispielsweise in dem Raumbereich 42 Ablenkelemente vorhanden sein, die dafür sorgen, dass beim Eintritt in die Mischkammer 50 das Mischmaterial eine Tangentialströmung bildet, also tangential in die Mischkammer eintritt. Selbstverständlich können derartige Ablenkelemente bzw. Drallerzeuger auch im Bereich der Mischkammer 50 selbst positioniert sein.

Bei im Reformerbereich 14 ablaufender katalytischer Reaktion kann dieses Mischmaterial beim Strömen entlang des Volumenbereichs 52 in dem den Reformerbereich 14 umgebenden bzw. zum Teil auch bereitstellenden Abschnitt des inneren Gehäuses 28 Wärme aufnehmen. Man erkennt, dass das Mischmaterial insbesondere in demjenigen Bereich, in welchem die stromaufwärtige Katalysatoranordnung 30 positioniert ist, in direkten Kontakt mit dem inneren Gehäuse 28 treten kann und somit Wärme, die in der Katalysatoranordnung 30 entsteht und über das elastische Material 34 auf das innere Gehäuse 28 übertragen wird, aufnehmen kann. Der Reformerbereich 14 stellt also insbesondere mit seinem von dem Mischmaterial sehr leicht und gut umströmbaren Abschnitt im Bereich der Katalysatoranordnung 30 eine Wärmetauscheranordnung bzw. Heizeinrichtung bereit. Man erkennt aber, dass derjenige Abschnitt des Reformerbereichs 14, in welchem die Katalysatoranordnung 32 angeordnet ist, von einem beispielsweise zylindrisch ausgestalteten Isolationselement 60 umgeben ist. Hier ist einerseits das Umströmen des inneren Gehäuses 28 durch das Mischmaterial also erschwert, andererseits kann dieses Isolationselement 60 als Strahlungsreflexionselement, also beispielsweise Strahlungsblech, ausgestaltet sein, das dafür sorgt, dass die im Bereich der Katalysatoranordnung 32 entstehende Wärme, insbesondere Strahlungswärme, verstärkt in diesem Bereich gehalten bzw. reflektiert wird. Es kann somit sichergestellt werden, dass beispielsweise in dem Fall, in dem in der Katalysatoranordnung 32 nur noch eine Nachreaktion der in der Katalysatoranordnung 30 noch nicht zur Reaktion gebrachten Bestandteile bei geringer Exothermie stattfinden wird, dort auch weniger Wärme abgegeben wird, um die Reaktion in dieser Katalysatoranordnung 32 mit verbesserter Qualität ablaufen zu lassen. Ein entsprechender Vorteil ergibt sich beispielsweise auch, wenn für die beiden Katalysatoranordnungen 30 und 32 unterschiedliche Katalysatormaterialien eingesetzt werden, von welchen dann das in der Katalysatoranordnung 32 eingesetzte eine Reaktion mit geringerer Exothermie und somit einem höhere Bedürfnis, Wärme zu halten, ausgebildet ist.

Auch kann das Bereithalten mehrerer Katalysatoranordnungen für den Fall, dass eine dieser Katalysatoranordnungen beschädigt wird, weiterhin die Funktionalität des Reformerbereichs 14 sicherstellen.

Um den bereits angesprochenen Kohlenwasserstoffdampf zur Gemischerzeugung bereitzustellen, ist an der Bodenwandung 44 bzw. im Bereich der Bodenwandung 44 des Mischkammergehäuses 40 diese Bodenwandung 44 beispielsweise vollständig überdeckendes poröses Verdampfermedium 62 vorgesehen. Dieses aus Geflecht, Gewirk, Schaumkeramik oder dergleichen bestehende poröse Verdampfermedium 62 nimmt den im Allgemeinen flüssigen Kohlenwasserstoff von einer Kohlenwasserstoffleitung 64 auf. Diese ist in demjenigen Bereich, in dem sie durch das Gehäuse 16, nämlich das Gehäuseteil 20, hindurchtritt und in das Mischkammergehäuse 40 eintritt, doppelwandig ausgebildet mit einem inneren Rohrabschnitt 66 und einem diesen unter Bildung eines Luftspalts 68 umgebenden äußeren Rohrabschnitt 70. Somit ist die Kohlenwasserstoffleitung 64 in demjenigen Bereich, in dem sie grundsätzlich auch von dem bereits vorerwärmten Mischmaterial umströmbar ist, thermisch isoliert. Die Gefahr, dass bereits in der Kohlenwasserstoffleitung selbst eine Kohlenwasserstoffverdampfung auftritt, kann somit ausgeschaltet werden.

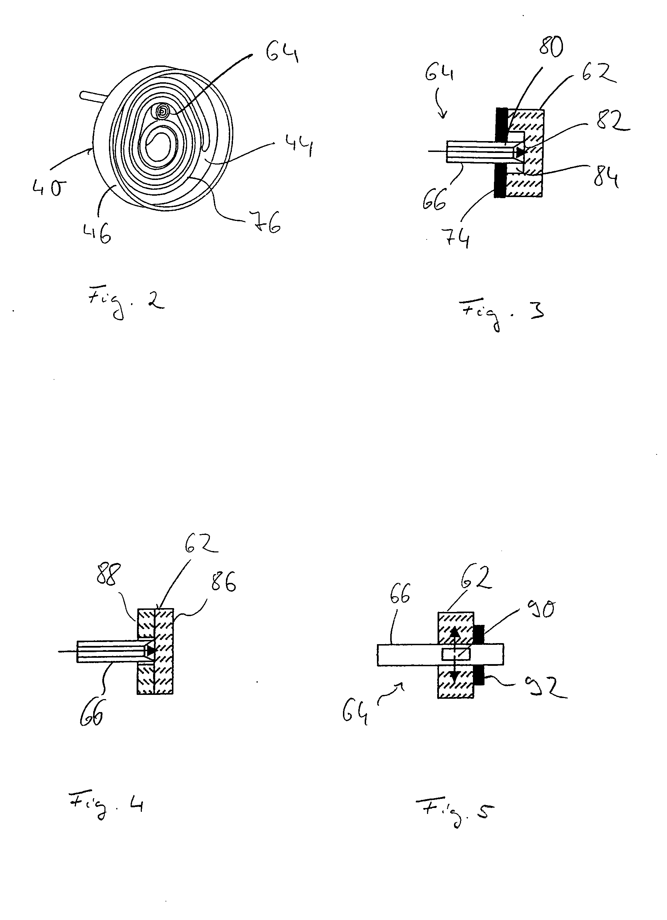

Die Kohlenwasserstoffleitung 64 erstreckt sich bis zu der von der Mischkammer 50 abgewandt liegenden Rückseite 72 des porösen Verdampfermediums 62. An dieser Rückseite 72 des porösen Verdampfermediums 62 liegt weiter eine vorzugsweise dieses poröse Verdampfermedium mit Ausnahme des Bereichs, in welchem die Kohlenwasserstoffleitung 64 an dieses heranragt, vollflächig überdeckende Wärmeverteilungsplatte 74, beispielsweise aus Metallmaterial. An der von dem porösen Verdampfermedium 62 abgewandten Seite dieser Wärmeverteilungsplatte 74 liegt eine als elektrisch erregbare Heizwendel ausgestaltete erste Heizeinrichtung 76. Zwischen dem Bodenwandungsbereich 44 und dieser ersten Heizeinrichtung 76 kann ein beispielsweise als Vlies ausgestaltetes Isolationselement 78 positioniert werden, um einen Wärmeübertrag von der ersten Heizeinrichtung 76 auf die Bodenwandung 64 so weit als möglich zu unterbinden und somit die in der ersten Heizeinrichtung 76 bereitgestellte Wärme auch unter Ausnutzung der guten Wärmeleitfähigkeit der Wärmeverteilungsplatte 74 möglichst vollflächig und gleichmäßig und effizient auf das Verdampfermedium 62 zu übertragen. Hierzu ist vorzugsweise auch vorgesehen, dass diese in Fig. 2 auch erkennbare erste Heizeinrichtung 76, die beispielsweise nach Art einer Heizspirale ausgestaltet sein kann, einen möglichst großen Bereich des porösen Verdampfermediums 62 bzw. der Wärmeverteilungsplatte 74 mit Wärme beaufschlagen kann. Die Wärmeverteilungsplatte 74 kann auch mit Schalenform ausgebildet sein. Sie umgibt dann das Verdampfermedium auch am Außenrandbereich und verhindert somit den Flüssigkeitsaustritt nicht nur an der Rückseite, sondern auch im äußeren Bereich des Verdampfermediums.

In Fig. 3 ist die Wechselwirkung der Kohlenwasserstoffleitung 64 mit dem porösen Verdampfermedium 62 dargestellt. Hier ist nur der innere Rohrabschnitt 66 gezeigt. Es ist selbstverständlich, dass auch der äußere Rohrabschnitt 70 so wie in Fig. 1 vorgesehen sein könnte.

Man erkennt, dass in einem Austrittsendbereich 80 die Kohlenwasserstoffleitung 64 bzw. der innere Rohrabschnitt 66 mit einem schneidenartig ausgestalteten Randbereich 82 versehen ist und in eine an der Rückseite des porösen Verdampfermediums 62 gebildete Aussparung 84 eingreift. Mit diesem schneidenartigen Randbereich 82 ist die Kohlenwasserstoffleitung 64 gegen das poröse Verdampfermedium 62 gepresst. Dies stellt sicher, dass der aus der Kohlenwasserstoffleitung 64 austretende flüssige Kohlenwasserstoff vollständig in den Volumenbereich des porösen Verdampfermediums 62 gelangen kann und sich dort verteilen kann, und dass nicht die Gefahr besteht, dass Teile des flüssigen Kohlenwasserstoffs heruntertropfen und sich in irgendwelchen Bereichen des Mischkammergehäuses 40 ansammeln. Diese Gefahr ist insbesondere bei Erwärmung und dabei ggf. auftretender Wölbung des Verdampfermediums gegeben. Dazu trägt auch bei, dass der Kontakt zwischen der Kohlenwasserstoffleitung 64 und dem porösen Verdampfermedium 62 in der Aussparung 84 stattfindet. Selbst dann, wenn unter ungünstigsten Umständen flüssiger Kohlenwasserstoff herabtropfen würde, würde er durch den die Aussparung 84 umgebenden Materialbereich des porösen Verdampfermediums 62 aufgefangen werden.

In Fig. 4 ist eine alternative Ausgestaltung des porösen Verdampfermediums 62 aus zwei Lagen 86, 88 dargestellt. Diese können beispielsweise hinsichtlich der jeweils speziellen Anforderungen optimiert sein. So kann die Lage 86 hinsichtlich der Kohlenwassertsoffabgabe durch Verdampfung optimiert sein, während die Lage 88 hinsichtlich der Wärmeaufnahme von der Wärmeverteilungsplatte 74 und der Kohlenwasserstoffaufnahme optimiert sein kann.

In Fig. 5 ist eine Variante gezeigt, bei welcher der Leitungsabschnitt 66 der Kohlenwasserstoffleitung 64 das poröse Verdampfermedium 62, entweder einlagig oder zweilagig ausgebildet, vollständig durchsetzt. Er tritt an der der Mischkammer 50 zugewandten Seite des porösen Verdampfermediums 52 aus und ist dort abgeschlossen. In dem im Dickenbereich des porösen Verdampfermediums 62 liegenden Abschnitt weist der Rohrabschnitt 66 eine oder mehrere Öffnungen 90 auf, durch welche der Kohlenwasserstoff dann aus der Leitung 64 austritt und in den Volumenbereich des porösen Verdampfermediums 62 eintritt. Auch hier ist die Gefahr des Kohlenwasserstoffaustritts aus der Leitung 64, ohne in das poröse Verdampfermedium 62 einzutreten, praktisch nicht gegeben.

Wie in den Figuren 1 und 5 erkennbar, kann das poröse Verdampfermedium an seiner der Mischkammer 50 zugewandten Seite in demjenigen Bereich, in dem die Kohlenwasserstoffleitung 64 in dieses flüssigen Kohlenwasserstoff einleitet, durch ein Ablenkelement 92 überdeckt sein. Dieses sorgt dafür, dass in dem unmittelbaren Bereich des Kohlenwasserstoffeintritts zwangsweise eine bezüglich der Leitung 64 radiale Verteilung stattfindet, ohne dass dort ein verstärkter Austritt von Kohlenwasserstoffdampf aus dem porösen Verdampfermedium 62 erzeugt werden kann. Somit kann die Verteilung des flüssigen Kohlenwasserstoffs in dem porösen Verdampfermedium und die Vergleichmäßigung der Abdampfung unterstützt werden.

Das Bereithalten der Wärmeleitplatte 74 an der Rückseite des porösen Verdampfermediums 62 hat ebenfalls den Vorteil, dass an dieser durch die erste Heizeinrichtug 76 verstärkt erwärmten Seite kein Kohlenwasserstoffdampf aus dem porösen Verdampfermedium 62 austreten kann.

Für eine Vergleichmäßigung der Abdampfung sorgt weiterhin, dass die Kohlenwasserstoffleitung 64 bezüglich der Längsmittenachse L, die im Prinzip auch die Längsmittenachse der Mischkammer 50 bildet, exzentrisch einmündet. Wird die Verdampferanordnung 10 in der in Fig. 1 gezeigten Situation eingebaut, so wird durch diese nach oben hin verschobene Einleitung des flüssigen Kohlenwasserstoffs verstärkt berücksichtigt, dass der Verteilung des flüssigen Kohlenwasserstoffs im porösen Verdampfermedium 62 durch Kapillarkraftwirkung auch noch eine Schwerkraftkomponente überlagert ist.

Das Bereithalten der Wärmeleitplatte 74 an der Rückseite des porösen Verdampfermediums 62 hat weiterhin den Vorteil, dass an dieser durch die erste Heizeinrichtug 76 verstärkt erwärmten Seite kein Kohlenwasserstoffdampf aus dem porösen Verdampfermedium 62 austreten kann.

Die Vergleichmäßigung der Kohlenwasserstoffverteilung im porösen Verdampfermedium 62 kann weiter dadurch noch unterstützt werden, dass mehrere Kohlenwasserstoffleitungen 64 an verschiedenen Bereichen in das poröse Verdampfermedium 62 flüssigen Kohlenwasserstoff einleiten.

Es ist selbstverständlich möglich, dass der Heizleiter der ersten Heizeinrichtung 76 auch unmittelbar in Kontakt mit dem porösen Verdampfermedium stehen kann. In diesem Fall kann es vorteilhaft sein, Bestandteile dieses porösen Verdampfermediums dann, wenn dieses beispielsweise als Metallvliesmaterial ausgestaltet ist, bereits bei der Fertigung des Heizleiters fest mit diesem zu verbinden, beispielsweise dadurch, dass feine Metalldrähte gegen diesen gepresst werden.

Man erkennt in Fig. 1 weiter, dass die Umfangswandung 64 des Mischkammergehäuses 40 von einer beispielsweise als Heizwendel ausgestalteten zweiten Heizeinrichtung 94 umgeben ist. Diese zweite Heizeinrichtung 94, welche ebenso wie die erste Heizeinrichtung 76 durch elektrische Erregung aktivierbar ist, sorgt dafür, dass einerseits die Umfangswandung 46 vorerwärmt wird und somit auch die Temperatur in der Mischkammer 50 erhöht wird. Andererseits überträgt diese zweite Heizeinrichtung 94 auf das den Raumbereich 42 durchströmende gasförmige Mischmaterial Wärme, so dass beispielsweise auch in einer Betriebsphase, in welcher im Katalysatorbereich 14 auf Grund noch nicht ablaufender katalytischer Reaktion keine oder nur wenig Wärme bereitgestellt werden kann, auf diese Art und Weise das in die Mischkammer 50 eintretende Mischmaterial vorerwärmt werden kann. Dieses vorerwärmte Mischmaterial kann sich dann in der ebenfalls bereits vorerwärmten Mischkammer 50 mit dem ebenfalls erwärmten Brennstoffdampf vermischen und somit beim weiteren Strömen in Richtung zum Reformerbereich 14 diesen bzw. die Katalysatoranordnungen 30, 32 desselben vorwärmen.

Zur Erwärmung des Reformerbereichs 14 in der Startphase kann bei der erfindungsgemäßen Verdampferanordnung 10 auch so vorgegangen werden, dass in einer Startphase zunächst die beiden Heizeinrichtungen 76, 94 aktiviert werden und somit ein vergleichsweise warmes Gemisch aus Kohlenwasserstoffdampf und Mischmaterial bereitgestellt wird. Dieses Gemisch kann dann durch Aktivieren eines Zündorgans, beispielsweise Glühzündstift 96, gezündet werden und somit in der Mischkammer 50 verbrannt werden.

Der Flammhalter 36 sorgt in dieser Phase dafür, dass die Verbrennung in der Mischkammer 50 gehalten wird und nicht zu einer Beschädigung der stromabwärtigen Katalysatoranordnung 30 führen kann. Die bei dieser Verbrennung erzeugten sehr heißen Verbrennungsprodukte treten durch den Flammhalter 36 und die Katalysatoranordnungen 30, 32 hindurch und sorgen somit sehr schnell für eine Erwärmung des Reformerbereichs 32. Ist seit dem Start der Verbrennung eine vorbestimmte Zeitdauer verlaufen oder/und liegt in den relevanten Systembereichen, beispielsweise dem Reformerbereich, eine ausreichend hohe Temperatur vor, was beispielsweise durch einen Temperaturfühler 98 erkannt werden kann, so kann die Verbrennung gestoppt werden, beispielsweise dadurch, dass kurzzeitig die Zufuhr von Mischmaterial oder/und Kohlenwasserstoff unterbunden wird. Nach dem Beenden der Verbrennung kann die Zufuhr von Mischmaterial bzw. Kohlenwasserstoff wieder aufgenommen werden, um dann das in der Reformeranordnung 14 in wasserstoffhaltiges Gas umzusetzende Gemisch bereitstellen zu können. Da in dieser Phase das den Volumenbereich 52 durchströmende Mischmaterial beispielsweise von dem Reformerbereich 14 bereits ausreichend Wärme aufnehmen kann, kann möglicherweise auch in Abhängigkeit von den vorherrschenden Umgebungstemperaturen die Aktivierung der zweiten Heizeinrichtung 94 oder/und der ersten Heizeinrichtung 76 beendet werden. Da jedoch in dieser Betriebsphase dann in der Mischkammer 50 keine dort sehr hohe Temperaturen erzeugende Verbrennung ablaufen wird, ist es vorteilhaft, in dieser Phase zumindest die erste Heizeinrichtung 76 zur Unterstützung der Brennstoffabdampfung weiter zu betreiben.

Es sei hier darauf hingewiesen, dass selbstverständlich das Mischmaterial auch im Bereich anderer oder zusätzlicher Wärmetauscheranordnungen Wärme aufnehmen kann. Beispielsweise kann in dem stromabwärts der Katalysatoranordnungen 30, 32 liegenden und beispielsweise in Richtung zu einer Brennstoffzelle führenden Strömungsbereich von dem den Reformerbereich 14 verlassenden vergleichsweise warmen Gas Wärme auf das Mischmaterial übertragen werden. Auch im Bereich einer Brennstoffzelle selbst wird im Betrieb der Brennstoffzelle Wärme erzeugt, die genutzt werden kann, um das Mischmaterial vorzuwärmen. Entsprechendes gilt auch für eine Gasreinigungsstufe, die zwischen dem Reformerbereich 14 und der Brennstoffzelle positioniert sein kann. Da im Brennstoffzellenbetrieb im Allgemeinen nicht der gesamte Wasserstoff mit Luftsauerstoff zur Reaktion gebracht werden kann und somit die Brennstoffzelle ein noch Restwasserstoff enthaltendes Gas verlässt, kann in einem so genannten Anodenabgasbrenner eine Nachverbrennung stattfinden. Die bei dieser Nachverbrennung bereitgestellte Wärme kann zumindest zum Teil dann auf das in die Mischkammer 50 einzuleitende Mischmaterial übertragen werden.

Das vorangehend mit Bezug auf die Figuren 1 bis 5 beschriebene System verbindet verschiedene für den Betrieb besonders vorteilhafte Maßnahmen. So wird einerseits durch das Vorerwärmen des Mischmaterials beispielsweise durch die zweite Heizeinrichtung 94 eine Vorerwärmung der Vorrichtung selbst erlangt, andererseits wird auch die Möglichkeit gegeben, das Mischmaterial bereits mit erhöhter Temperatur in den Reformerbereich 14 einzuleiten. Durch die Ausgestaltung der zur Kohlenwasserstoff- bzw. Brennstoffabdampfung beitragenden Systembereiche, insbesondere auch der Kohlenwasserstoffleitung und der ersten Heizeinrichtung 76 wird dafür gesorgt, dass dieses erwärmt in den Reformerbereich 14 geleitete Mischmaterial in sehr gleichmäßiger Art und Weise mit Kohlenwasserstoffdampf versetzt ist. Durch die spezielle Ausgestaltung des Reformerbereichs wird weiterhin sichergestellt, dass einerseits dort die katalytische Reaktion mit der gewünschten Qualität ablaufen kann, dass andererseits aber auch dann, wenn im Bereich von einer der Katalysatoranordnungen Probleme auftreten, die andere oder die anderen Katalysatoranordnungen, sofern weitere noch vorgesehen sind, diese Funktion vollständig übernehmen können.

Beim Betrieb eines derartigen Reformerbereichs 14 ist zu berücksichtigen, dass grundsätzlich der im Mischmaterial enthaltene Sauerstoff, also beispielsweise Luftsauerstoff, die Lebensdauer des Katalysatormaterials der Katalysatoranordnungen 30, 32 erhöht, aber gleichzeitig zur verstärkten Rußbildung führt. Durch die Zugabe von Wasserdampf oder von Prozessabgas, wie beispielswesie dem vorangehend angesprochenen Brennerabgas, oder ggf. auch noch wasserstoffhaltigem Brennstoffzellenabgas wird es möglich, den im Reformerbereich 14 ablaufenden katalytischen Prozess bei unterdrückter Rußbildung ablaufen zu lassen, wobei gleichzeitig dafür gesorgt ist, dass das Material der Katalysatoranordnungen 30, 32 nicht zu heiß wird. Dieses Eingeben oder Beimischen von wasserstoffhaltigen Mischmaterialanteilen beispielsweise zu der ebenfalls einen Teil des Mischmaterials bereitstellenden Luft erfolgt vorzugsweise bei Temperaturen über dem Taupunkt, um auf diese Art und Weise eine Kondensation des transportierten Wasserdampfs zu vermeiden. Brennerabgase oder Brennstoffzellenabgase können dem Mischmaterial bereits vor dem Reformerbereich, also beispielsweise bei oder vor dem Eintritt in den Volumenbereich 52 beigemischt werden. Alternativ ist es hier auch möglich, eine Eingabe dieser zusätzlichen Mischmaterialbestandteile erst nach der Mischkammer 50, also beispielsweise zwischen dem Flammhalter 36 und der stromaufwärtigen Katalysatoranordnung oder auch vor dem Flammhalter 36, vorzusehen. Weiterhin ist es möglich, derartige zusätzliche Mischmaterialbestandteile, also beispielsweise Anodenbrennerabgase oder Brennstoffzellenabgase durch eine Luftfördereinheit, also ein Gebläse, anzusaugen, das allgemein dazu dient, dass in die Mischkammer 50 einzuleitende Mischmaterial voranzufördern.

Zur Erhöhung der Sicherheit des Gesamtsystems kann vorgesehen sein, dass die in der Fig. 1 gezeigte Verdampferanordnung 10 außerhalb des Fahrzeuginnenraums oder/und in einem weiteren gasdichten Behältnis angeordnet wird. In diesem gasdichten Behältnis kann ein Gassensor vorgesehen sein, um dann, wenn der Austritt von Gas, insbesondere wasserstoffhaltigem Gas, erfasst wird, eine entsprechende Warnung erzeugen zu können. Weiterhin ist es selbstverständlich, dass dieses Behältnis bzw. die in der Fig. 1 gezeigte Anordnung ebenfalls gedämpft gelagert werden kann, beispielsweise auf Federn oder Gummipuffern, um durch Vibrationen möglicherweise erzeugte Beschädigungen vermeiden zu können. Das den Reformerbereich 14 verlassende mit Wasserstoff angereicherte und somit sehr explosionsgefährliche Material kann in Richtung zu einer Brennstoffzelle oder einem entsprechenden Tank über eine selbstverständliche gasdichte und explosionsgeschützte Leitung gefördert werden.

Abschließend sei darauf hingewiesen, dass als zu verdampfender Kohlenwasserstoff jeglicher Kohlenwasserstoff eingesetzt werden kann, der beispielsweise für die Erzeugung von wasserstoffhaltigem Gas geeignet ist. Hier können insbesondere auch die in einem Kraftfahrzeug allgemein vorgesehenen Brennstoffe, wie z.B. Diesel, Biodiesel oder Benzin, zum Einsatz gelangen. Weiter sei darauf hingewiesen, dass insbesondere die vorangehend mit Bezug auf den Verdampfungsbereich 12 beschriebenen Aspekte der vorliegenden Erfindung nicht nur in Verbindung mit einem Reformerbereich vorgesehen sein können. Vielmehr kann ein derartiger Verdampferbereich selbstverständlich auch in einem Brenner eines Heizgerätes, wie es beispielsweise als Standheizung oder Zuheizung in einem Fahrzeug eingesetzt wird, zum Einsatz gelangen.

## Patentansprüche

1. Verdampferanordnung zur Erzeugung eines Kohlenwasserstoffdampf/Mischmaterial-Gemisches, umfassend eine durch einen Umfangswandungsbereich (46) und einen Bodenwandungsbereich (44) umgebene Mischkammer (50), wobei in dem Umfangswandungsbereich (46) Eintrittsöffnungen (48) zum Eintritt von gasförmigem Mischmaterial in die Mischkammer (50) vorgesehen sind und der Bodenwandungsbereich (44) ein poröses Verdampfermedium (62) zur Aufnahme von flüssigem Kohlenwasserstoff sowie dem porösen Verdampfermedium (62) zugeordnet eine erste Heizeinrichtung (76) aufweist,
**gekennzeichnet durch** eine zweite Heizeinrichtung (94) zum Erwärmen des Mischmaterials vor oder/und bei Durchtritt **durch** die Eintrittsöffnungen (48).

2. Verdampferanordnung nach Anspruch 1,
**dadurch gekennzeichnet, dass** die zweite Heizeinrichtung (94) am Umfangswandungsbereich (46) vorgesehen ist.

3. Verdampferanordnung nach Anspruch 2,
**dadurch gekennzeichnet, dass** die zweite Heizeinrichtung (94) den Umfangswandungsbereich (46) umgebend angeordnet ist.

4. Verdampferanordnung nach Anspruch 2 oder 3,
**dadurch gekennzeichnet, dass** die zweite Heizeinrichtung (94) einen elektrisch erregbaren Heizleiter umfasst.

5. Verdampferbrenner nach einem der Ansprüche 1 bis 4,
**dadurch gekennzeichnet, dass** die zweite Heizeinrichtung (94) einen in Strömungsrichtung des Mischmaterials stromaufwärts der Eintrittsöffnungen (48) liegenden Wärmetauscherbereich (14) umfasst.

6. Verdampferbrenner nach Anspruch 5,
**dadurch gekennzeichnet, dass** der Wärmetauscherbereich (14) als Wärmequelle einen in Strömungsrichtung stromabwärts der Mischkammer (50) angeordneten und Katalysatormaterial (30, 32) enthaltenden Reformerbereich (14) umfasst.

7. Verdampferbrenner nach dem Oberbegriff des Anspruchs 1 oder einem der Ansprüche 1 bis 6,
**dadurch gekennzeichnet, dass** wenigstens eine Kohlenwasserstoffleitung (64) zum Leiten von flüssigem Kohlenwasserstoff zu dem porösen Verdampfermedium (62) vorgesehen ist und dass ein Austrittsendbereich (80) der wenigstens einen Kohlenwasserstoffleitung (64) unter Druck gegen das poröse Verdampfermedium (62) gehalten ist.

8. Verdampferbrenner nach Anspruch 7,
**dadurch gekennzeichnet, dass** die wenigstens eine Kohlenwasserstoffleitung (64) in ihrem Austrittsendbereich (80) einen schneidenartigen und gegen das poröse Verdampfermedium (62) gepressten Randbereich (82) aufweist.

9. Verdampferbrenner nach Anspruch 8,
**dadurch gekennzeichnet, dass** die wenigstens eine Kohlenwasserstoffleitung in oder/und nahe ihrem Austrittsendbereich thermisch isoliert ist.

10. Verdampferbrenner nach Anspruch 9,
**dadurch gekennzeichnet, dass** die wenigstens eine Kohlenwasserstoffleitung (64) in oder/und nahe ihrem Austrittsendbereich (80) doppelwandig ausgebildet ist.

11. Verdampferbrenner nach einem der Ansprüche 7 bis 10,
**dadurch gekennzeichnet, dass** die wenigstens eine Kohlenwasserstoffleitung (64) - bezogen auf eine Längsmittenachse (L) Mischkammer (50) - exzentrisch in das poröse Verdampfermedium (62) einmündet.

12. Verdampferbrenner nach dem Oberbegriff des Anspruchs 1 oder einem der Ansprüche 1 bis 11,
**dadurch gekennzeichnet, dass** an einer von der Mischkammer (50) abgewandten Seite des porösen Verdampfermediums (62) zwischen diesem und der ersten Heizeinrichtung (76) ein Wärmeleitelement (74) angeordnet ist.

13. Verdampferbrenner nach Anspruch 12,
**dadurch gekennzeichnet, dass** das Wärmeleitelement (74) eine Wärmeleitplatte (74) umfasst.

14. Verdampferbrenner nach dem Oberbegriff des Anspruchs 1 oder einem der Ansprüche 1 bis 3,
**dadurch gekennzeichnet, dass** in einem in Strömungsrichtung stromabwärts der Mischkammer (50) angeordneten Reformerbereich (14) wenigstens zwei in Strömungsrichtung aufeinander folgende Katalysatoranordnungen (30, 32) vorgesehen sind.

15. Verdampferbrenner nach Anspruch 14,
**dadurch gekennzeichnet, dass** wenigstens eine (32) der Katalysatoranordnungen (30, 32) stärker gegen Wärmeabgabe gesichert ist, als wenigstens eine andere (32) der Katalysatoranordnungen (30, 32).
